# EUROPÄISCHE PATENTSCHRIFT

(11) **EP 0 651 196 B1**
(45) Veröffentlichungstag und Bekanntmachung des Hinweises auf die Patenterteilung: **01.07.1998**
(21) Anmeldenummer: 94113037.9
(22) Anmeldetag: 20.08.1994
(51) Int. Cl.: F16L 25/00, F16J 13/04

(54) **Verbindung für dünnwandige Rohre**
Connection for thin-walled tubes
Raccord pour tuyaux à paroi mince

(30) Priorität: 07.10.1993 DE 4334171
(43) Veröffentlichungstag der Anmeldung: 03.05.1995
(73) Patentinhaber: Witzenmann Rohr- und Bauelemente GmbH, D-58332 Schwelm (DE)
(72) Erfinder:
(74) Vertreter: Lemcke, Rupert, Dipl.-Ing.

(56) Entgegenhaltungen:
- DE-A- 2 100 952
- DE-A- 3 626 403
- DE-U- 9 007 056
- DE-U- 9 200 745
- US-A- 3 929 359
- US-A- 4 575 133
- US-A- 4 969 670

## Beschreibung

Die Erfindung betrifft eine Verbindung für die aufeinander zu gerichteten Enden dünnwandiger Metallrohre mit Kreisquerschnitt, nach dem Oberbegriff des Anspruches 1, wie sie im wesentlichen aus der DE 36 26 403 Al bekannt ist.

Dünnwandige Metallrohre aus nichtrostendem Stahl, insbesondere Edelstahl, werden heutzutage vielfach für Auskleidungszwecke von Bauteilen verwendet, um diese Bauteile vor aggressiven Medien zu schützen. Beispiel hierfür ist - worauf die Erfindung jedoch nicht beschränkt sein soll - die Auskleidung von Kaminen, um bei diesen im Hinblick auf ältere versottete Kamine eine Sanierung vorzunehmen oder um diese für den Betrieb von sogenannten Brennwertanlagen zu schützen. Nachfolgend wird auf diesen Bereich zur Vereinfachung der Darstellung ohne Einschränkung Bezug genommen.

Sollen Kamine mit diesen Auskleidungsrohren versehen werden, so müssen die Auskleidungsrohre stückweise eingesetzt und miteinander verbunden werden. Bekannte Verbindungsart ist es hierbei, die aufeinander zu gerichteten Enden benachbarter Rohrstücke miteinander zu verschrauben, das heißt also, in diese Enden ein Gewinde einzuprägen. Dabei treten jedoch erhebliche Schwierigkeiten dadurch auf, daß die Rohre dünnwandig und damit wenig formstabil sind, so daß unter der natürlichen Voraussetzung kreisförmiger Querschnitte von dieser Querschnittsform Abweichungen auftreten, die das gegenseitige Verschrauben behindern, wenn nicht gar unmöglich machen.

Dies gilt auch dann, wenn einzelne Rohrabschnitte als flexible Rohre mit schraubengangförmiger Wellung ausgebildet sind. Um solche flexiblen Rohrstücke untereinander oder mit geraden Glattrohren zu verbinden, müssen die flexiblen Rohrstücke an ihren Enden mit kurzen, hülsenförmigen Glattrohrstücken ausgerüstet werden, die dann miteinander zu verschrauben sind. Solche flexiblen Rohrstücke finden im übrigen dann Anwendung, wenn der Kamin einen sogenannten Versatz aufweist, die Auskleidung also einen S-förmigen Bereich enthält.

Aufgabe der Erfindung ist es, die Verbindung dünnwandiger Rohrstücke untereinander bzw. eines flexiblen Rohrstückes mit einem Glattrohr einfacher, leichter montierbar bzw. gegebenenfalls demontierbar und trotzdem sicher zu gestalten.

Diese Aufgabe ist ausgehend von einer Verbindung der eingangs genannten Art erfindungsgemäß dadurch gelöst, daß in das Ende des starren Gegenrohrstückes eine dünnwandige Hülse aus Metall mit einem dem Innendurchmesser des Rohres entsprechenden Außendurchmesser eingesetzt und mit dem nicht aufgeweiteten Teil des Gegenrohrstückes fest verbunden ist.

Durch diese erfindungsgemäße Gestaltung ist für das Aneinanderfügen zweier Rohre einmal die Möglichkeit geschaffen, diese durch einfaches Ineinanderstecken fest miteinander zu verbinden, so daß die mit dem schraubenden Ineinanderfügen verbundenen Probleme nicht mehr auftreten können. Zum anderen ist durch die Hülse aber auch insbesondere bei flexiblen Rohren verhindert, daß sich das Ende des Rohres nach radial innen hin verformen kann beispielsweise dann, wenn auf die Rohrverbindung sehr hohe Zugkräfte im Sinne eines Lösens der Verbindung ausgeübt werden. Die Hülse sorgt also dafür, daß die Rohrverbindung äußerst stabil und damit dauerhaft ist.

Das Rohr kann ein starres Rohr sein und ebenso kann das starre Gegenrohrstück das Ende eines starren Rohres sein.

Es besteht jedoch auch die Möglichkeit, daß das Rohr ein durch schraubengangförmige oder ringförmige Wellung flexibel gestaltetes Rohr ist. Auch hier kann wieder das starre Gegenrohrstück das Ende eines starren Rohres sein. Sollen jedoch zwei flexible Rohre miteinander verbunden werden, so kann das starre Gegenrohrstück ein auf das Ende eines anschließenden flexiblen Rohres aufgesetztes und mit diesem fest beispielsweise durch Punktschweißen verbundenes Rohrstück sein.

Für die Aneinanderfügung zweier flexibler Rohre gibt also die Erfindung die Möglichkeit, das jeweilige flexible Rohrstück nur an einem Ende mit einem Gegenrohrstück auszustatten. Das andere Ende kann auf das dort gegenüberstehende Gegenrohrstück einfach aufgeschoben bzw. in dieses eingeschoben werden, wobei die Nasen sich mit der Wellung bzw. Profilierung des flexiblen Rohres verhaken und somit die Verbindung gegen unbeabsichtigtes Lösen schützen.

Soll eine solche Rohrverbindung auf der anderen Seite lösbar gestaltet werden, so kann dies in einfacher Weise durch Verwendung eines schraubengangförmig gewellten Rohres geschehen, das dann durch schraubende Bewegung wieder vom Gegenrohrstück gelöst werden kann.

Die Hülse kann ausgehend von ihrer der Stirnkante gegenüberliegenden Kante über den Umfang verteilt mehrere im wesentlichen U-förmige, sich achsparallel erstreckende und sich bis in den aufgeweiteten Endbereich des Gegenrohrstückes erstreckende Ausschnitte aufweisen. Über diese Ausschnitte kann Feuchtigkeit abfließen, die sich eventuell an der genannten Schulter des Gegenrohrstückes außerhalb der Hülse ansammelt.

Auch kann es vorteilhaft sein, daß die Hülse die Nasen anstelle des Gegenrohrstückes aufweist. In allen Fällen können die Nasen U-förmig ausgebildet sein.

Zweckmäßig ist es, daß das Gegenrohrstück über den Umfang verteilt mehrere von seiner Stirnkante ausgehende, achsparallele Einschnitte aufweist. Durch diese Einschnitte ist das Gegenrohrstück an seinem Vorderende etwas aufweitbar, was ebenfalls die Montage bzw. das Einstecken des gegebenenfalls flexiblen Rohrstückes erleichtert.

Schließlich kann insbesondere bei Verwendung flexibler Rohre vorgesehen sein, daß das aufgeweitete Ende des starren Gegenrohrstückes über den Umfang verteilt mehrere Öffnungen zum Einbringen einer Dichtmasse aufweist. Wird über die Öffnungen eine solche Dichtmasse beispielweise eingespritzt, so füllt sie einen Teil der Profilierung des flexiblen Rohres über dessen Umfang nach Art einer Labyrinthdichtung.

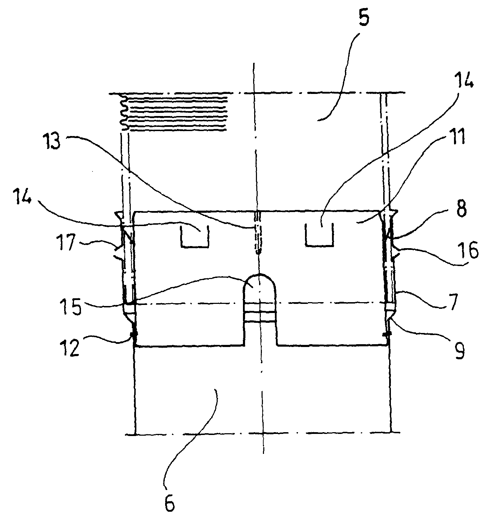

Weitere Einzelheiten der Erfindung ergeben sich aus der nachfolgenden Beschreibung einer bevorzugten Ausführungsform, die auf der Zeichnung dargestellt ist.

Bei der dargestellten Rohrverbindung ist ein flexibles Rohr 5 in ein Gegenrohrstück 6 eingesetzt. Dazu weist das Gegenrohrstück 6 endständig eine Aufweitung 7 auf so, daß der Innendurchmesser der Aufweitung dem Außendurchmesser des Rohres 5 entspricht.

Aus der Aufweitung 7 sind über den Umfang verteilte Nasen 8 ausgestanzt, die sich vom freien Ende des Gegenrohrstückes 6 fort erstrecken und nach radial innen aufgebogen sind. Wird das flexible Rohr 5 in die Aufweitung 7 eingesteckt, so verrasten die Nasen mit der Profilierung des flexiblen Rohres 5 und halten dieses gegen ein Herausziehen aus der Aufweitung 7 fest. Soll die Verbindung gelöst werden, so kann dies durch schraubende Bewegung geschehen, wenn das Rohr 5 mit einer schraubengangförmig umlaufenden Profilierung versehen ist.

Um als Montagehilfe die Aufsteck- bzw. Einstecktiefe zu definieren, ergibt sich dies durch die Aufweitung 7 und die damit entstehende Schulter 9 von selbst.

In das Gegenrohrstück 6 ist eine Hülse 11 eingesetzt und mit ihrem rückwärtigen Ende mit dem nicht aufgeweiteten Teil des Gegenrohrstückes 6 beispielsweise durch Punktschweißen 12 fest verbunden. Wie dargestellt weist die Hülse 11 Nasen 14 auf, die zusätzlich zu den Nasen 8 oder an deren Stelle der Verbindung dienen.

Der Außendurchmesser der Hülse 11 entspricht dem Innendurchmesser des flexiblen Rohres 5. Dadurch entsteht zwischen Aufweitung 7 und Hülse 11 ein Ringraum, in den das Ende des flexiblen Rohres 5 eingesteckt werden kann. Um diese Einsteckarbeit zu erleichtern, kann die Aufweitung 7 mit mehreren über den Umfang verteilt angeordneten, von ihrer Stirnkante ausgehenden, achsparallelen Einschnitten 13 versehen sein, so daß sie sich beim Einstecken des flexiblen Rohres 5 elastisch etwas nach außen aufbiegen kann.

Die Hülse 11 weist ausgehend von ihrer der Stirnkante gegenüberliegenden Kante über den Umfang verteilt mehrere im wesentlichen U-förmige, sich achsparallel erstreckende und sich bis in den aufgeweiteten Endbereich des Gegenrohrstückes 6 erstreckende Ausschnitte 15 auf, damit Flüssigkeit beispielsweise in Form von Kondenswasser abfließen kann, die sich an der Schulter 9 zwischen Aufweitung 7 und Hülse 11 ansammelt.

Schließlich sind an der Aufweitung 7 über den Umfang verteilt mehrere Öffnungen 16 in warzenförmigen Ausprägungen 17 angeordnet, um das Einspritzen einer Dichtmasse zu ermöglichen. Diese Dichtmasse verteilt sich dann über den Umfang des flexiblen Rohres 5 in dessen Profilierung, so daß eine Labyrinthdichtung zwischen Aufweitung und flexiblem Rohr 5 gebildet ist.

Wie aus der dargestellten Ausführungsform ersichtlich, gestaltet sich die Montage zwischen flexiblem Rohr und einem weiteren Rohr äußerst einfach, indem das Ende des flexiblen Rohres einfach nur in das Gegenrohrstück einzustecken ist, wobei das Gegenrohrstück entweder ein an einem weiteren flexiblen Rohr angebrachtes Teil sein kann oder das Ende eines weiterführenden Glattrohres. Das flexible Rohr muß nicht mehr an beiden Enden mit entsprechenden Befestigungsmitteln versehen werden. Vielmehr genügt es, das flexbile Rohr nur an einem Ende mit einem Gegenrohrstück auszustatten. Trotzdem ist eine lösbare Verbindung entstanden, wenn für die Ausbildung des flexiblen Rohres eine schraubengangförmige Wellenprofilierung gewählt ist.

Vorstehend ist ein Beispiel beschrieben, bei dem ein flexibles Rohr mit einem weiteren flexiblen Rohr oder einem Glattrohr verbunden ist. Anstelle des flexiblen Rohres kann aber ebenfalls ein Glattrohr Verwendung finden. Dieses muß dann wenigstens eine umlaufende radial gerichtete Welle aufweisen, in die die Nasen des Gegenrohrstückes einrasten können.

## Patentansprüche

1. Verbindung für die aufeinander zu gerichteten Enden dünnwandiger Metallrohre (5, 6) mit Kreisquerschnitt, insbesondere Rohre aus nichtrostendem Stahl zur Auskleidung von Kaminen, wobei das Ende eines Rohres (5) mit wenigstens einer umlaufenden, radial gerichteten Welle (3) in ein starres, über seinen Endbereich auf den Außendurchmesser des Rohres (5) aufgeweitetes Gegenrohrstück (6) eingesetzt ist, das Gegenrohrstück (6) wenigstens mittelbar über den Umfang verteilt mehrere aus ihm ausgeschnittene, sich mit ihren freien Enden in Richtung auf das Ende des wenigstens eine Welle aufweisenden Rohres (5) erstreckende Nasen (8, 14) hat, und die Nasen (8, 14) in Radialrichtung der Rohre (5, 6) auf das wenigstens eine Welle aufweisende Rohr (5) hin bis in dessen Wellenquerschnitt hinein abgebogen sind,
dadurch gekennzeichnet,
daß in das Ende des starren Gegenrohrstückes (6) eine dünnwandige Hülse (11) aus Metall mit einem dem Innendurchmesser des Rohres (5) entsprechenden Außendurchmesser eingesetzt und mit dem nicht aufgeweiteten Teil des Gegenrohrstückes (6) fest (12) verbunden ist.

2. Verbindung nach Anspruch 1,
dadurch gekennzeichnet,
daß das starre Gegenrohrstück (6) das Ende eines starren Rohres ist.

3. Verbindung nach Anspruch 1,
dadurch gekennzeichnet,
daß das Rohr ein durch schraubengangförmige oder ringförmige Wellung flexibel gestaltetes Rohr (5) ist.

4. Verbindung nach Anspruch 3,
dadurch gekennzeichnet,
daß das starre Gegenrohrstück (6) ein auf das Ende eines anschließenden flexiblen Rohres aufgesetztes und mit diesem fest beispielsweise durch Punktschweißen verbundenes Rohrstück ist.

5. Verbindung nach einem der vorhergehenden Ansprüche,
dadurch gekennzeichnet,
daß die Hülse (11) durch Punktschweißen mit dem Gegenrohrstück (6) verbunden ist.

6. Verbindung nach einem der vorhergehenden Ansprüche,
dadurch gekennzeichnet,
daß die Hülse (11) ausgehend von ihrer der Stirnkante gegenüberliegenden Kante über den Umfang verteilt mehrere im wesentlichen U-förmige, sich achsparallel erstreckende und sich bis in den aufgeweiteten Endbereich (7) des Gegenrohrstückes (6) erstreckende Ausschnitte (15) aufweist.

7. Verbindung nach einem der vorhergehenden Ansprüche,
dadurch gekennzeichnet,
daß die Hülse die Nasen (14) an Stelle des Gegenrohrstückes (6) aufweist.

8. Verbindung nach einem der vorhergehenden Ansprüche,
dadurch gekennzeichnet,
daß die Nasen (8, 14) U-förmig ausgebildet sind.

9. Verbindung nach einem der vorhergehenden Ansprüche,
dadurch gekennzeichnet,
daß das Gegenrohrstück (6) über den Umfang verteilt mehrere von seiner Stirnkante ausgehende, achsparallele Einschnitte (13) aufweist.

10. Verbindung nach einem der vorhergehenden Ansprüche,
dadurch gekennzeichnet,
daß das aufgeweitete Ende (7) des starren Gegenrohrstückes (6) über den Umfang verteilt mehrere Öffnungen (16) zum Einbringen einer Dichtmasse aufweist.

## Claims

1. Connection for the facing ends of thin-walled metal tubes (5, 6) of a circular cross section, in particular tubes of stainless steel for lining chimneys, wherein the end of one tube (5) with at least one circulating, radially directed corrugation (3) is inserted in a rigid counter tube piece (6), which is widened over its end region to the outside diameter of the tube (5), the counter tube piece (6) has a plurality of lugs (8, 14) which are distributed at least indirectly over the circumference, are cut out of this piece and extend with their free ends in the direction of the end of the tube (5) comprising at least one corrugation, and the lugs (8, 14) are bent in the radial direction of the tubes (5, 6) towards the tube (5) comprising at least one corrugation into the corrugated cross section of the latter, characterised in that a thin-walled sleeve (11) of metal with an outside diameter corresponding to the inside diameter of the tube (5) is inserted in the end of the rigid counter tube piece (6) and firmly connected (12) to the part of the counter tube piece (6) which is not widened.

2. Connection according to claim 1, characterised in that the rigid counter tube piece (6) is the end of a rigid tube.

3. Connection according to claim 1, characterised in that the tube is a tube (5) formed in a flexible manner by screw thread-shaped or annular corrugations.

4. Connection according to claim 3, characterised in that the rigid counter tube piece (6) is a tube piece which is placed on the end of an adjacent flexible tube and firmly connected to the latter by, for example, spot welding.

5. Connection according to one of the preceding claims, characterised in that the sleeve (11) is connected to the counter tube piece (6) by spot welding.

6. Connection according to one of the preceding claims, characterised in that, starting from its edge lying opposite the front edge, the sleeve (11) comprises a plurality of essentially U-shaped cutouts (15) distributed over the circumference and extending paraxially and into the widened end region (7) of the counter tube piece (6).

7. Connection according to one of the preceding claims, characterised in that the sleeve comprises the lugs (14) instead of the counter tube piece (6).

8. Connection according to one of the preceding claims, characterised in that the lugs (8, 14) are U-shaped.

9. Connection according to one of the preceding claims, characterised in that the counter tube piece (6) comprises a plurality of paraxial notches (13) which are distributed over the circumference and start from its front edge.

10. Connection according to one of the preceding claims, characterised in that the widened end (7) of the rigid counter tube piece (6) comprises a plurality of openings (16), which are distributed over the circumference, for introducing a sealing compound.

## Revendications

1. Raccord pour les extrémités tournées l'une vers l'autre de tuyaux métalliques (5, 6) à paroi mince de section circulaire, notamment de tuyaux en acier inoxydable pour le chemisage de cheminées, l'extrémité d'un tuyau (5) étant insérée, par au moins une ondulation entourante (3) orientée radialement, dans un tronçon de tuyau complémentaire (6) rigide, élargi sur sa région terminale au diamètre extérieur du tuyau (5), le tronçon de tuyau complémentaire (6) possédant, répartis au moins indirectement sur sa circonférence, plusieurs ergots (8, 14) découpés dans son matériau et s'étendant par leurs extrémités libres en direction de l'extrémité du tuyau (5) présentant au moins une ondulation, et les ergots (8, 14) étant recourbés, dans la direction radiale des tuyaux (5, 6), vers le tuyau (5) présentant au moins une ondulation, jusqu'à l'intérieur de sa section ondulée,
caractérisé en ce qu'une douille (11) en métal à paroi mince, d'un diamètre extérieur correspondant au diamètre intérieur du tuyau (5), est insérée dans l'extrémité du tronçon de tuyau complémentaire rigide (6), et est fixement assemblée (12) à la partie non élargie du tronçon de tuyau complémentaire (6).

2. Raccord selon la revendication 1, **caractérisé** en ce que le tronçon de tuyau complémentaire rigide (6) est l'extrémité d'un tuyau rigide.

3. Raccord selon la revendication 1, **caractérisé** en ce que le tuyau est un tuyau (5) rendu flexible par une ondulation hélicoïdale ou annulaire.

4. Raccord selon la revendication 3, **caractérisé** en ce que le tronçon de tuyau complémentaire rigide (6) est un tronçon de tuyau monté sur l'extrémité d'un tuyau flexible consécutif et assemblé fixement à ce dernier, par exemple par soudage par points.

5. Raccord selon une des revendications précédentes, **caractérisé** en ce que la douille (11) est assemblée au tronçon de tuyau complémentaire (6) par soudage par points.

6. Raccord selon une des revendications précédentes, **caractérisé** en ce que la douille (11) présente, en partant de son bord opposé au bord frontal, plusieurs découpures (15) essentiellement en forme de U, réparties sur la circonférence, qui s'étendent en parallélisme axial jusque dans la région terminale élargie (7) du tronçon de tuyau complémentaire (6).

7. Raccord selon une des revendications précédentes, **caractérisé** en ce que c'est la douille, plutôt que le tronçon de tuyau complémentaire (6), qui présente les ergots (14).

8. Raccord selon une des revendications précédentes, **caractérisé** en ce que les ergots (8, 14) sont configurés en forme de U.

9. Raccord selon une des revendications précédentes, **caractérisé** en ce que le tronçon de tuyau complémentaire (6) présente, réparties sur la circonférence, plusieurs entailles (13) en parallélisme axial, partant de son bord frontal.

10. Raccord selon une des revendications précédentes, **caractérisé** en ce que l'extrémité élargie (7) du tronçon de tuyau complémentaire rigide (6) présente, réparties sur la circonférence, plusieurs ouvertures (16) pour l'introduction d'un matériau d'étanchéité.
